(19) Europäisches Patentamt

European Patent Office

Office européen des brevets

(11) **EP 1 459 555 B1**

(12) **EUROPEAN PATENT SPECIFICATION**

(45) Date of publication and mention
of the grant of the patent:
**12.04.2006 Bulletin 2006/15**

(51) Int Cl.:
*H04N 7/26* (2006.01)  *H04N 7/24* (2006.01)
*G06T 1/00* (2006.01)  *G11B 20/00* (2006.01)

(21) Application number: **02790594.2**

(22) Date of filing: **12.12.2002**

(86) International application number:
**PCT/IB2002/005498**

(87) International publication number:
**WO 2003/053064 (26.06.2003 Gazette 2003/26)**

(54) **QUANTIZATION INDEX MODULATION (QIM) DIGITAL WATERMARKING OF MULTIMEDIA SIGNALS**

QUANTISIERUNGS-INDEX-MODULIERTES (QIM) EINBETTEN EINES DIGITALEN WASSERZEICHENS IN EIN MULTIMEDIA-SIGNAL

REALISATION DE FILIGRANES NUMERIQUES PAR MODULATION D'INDICE DE QUANTIFICATION (QIM) DE SIGNAUX MULTIMEDIA

(84) Designated Contracting States:
**AT BE BG CH CY CZ DE DK EE ES FI FR GB GR IE IT LI LU MC NL PT SE SI SK TR**

(30) Priority: **14.12.2001 EP 01204889**

(43) Date of publication of application:
**22.09.2004 Bulletin 2004/39**

(73) Proprietor: **Koninklijke Philips Electronics N.V.
5621 BA Eindhoven (NL)**

(72) Inventor: **KALKER, Antonius, A., C., M.
NL-5656 AA Eindhoven (NL)**

(74) Representative: **Schmitz, Herman Jan Renier
Philips
Intellectual Property & Standards
P.O. Box 220
5600 AE Eindhoven (NL)**

(56) References cited:
EP-A- 1 253 784    US-B1- 6 314 192

- CHEN B ET AL: "Quantization index modulation: a class of provably good methods for digital watermarking and information embedding" ISIT 2000 SORRENTO ITALY, 25 - 30 June 2000, page 46 XP010509920 SORRENTO ITALY
- CHEN B ET AL: "Achievable performance of digital watermarking systems" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA, IEEE COMPUT. SOC, US, 7 June 1999 (1999-06-07), pages 13-18, XP010342868 ISBN: 0-7695-0253-9
- CHEN B ET AL: "Digital watermarking and information embedding using dither modulation" MULTIMEDIA SIGNAL PROCESSING, 1998 IEEE SECOND WORKSHOP ON REDONDO BEACH, CA, USA 7-9 DEC. 1998, PISCATAWAY, NJ, USA, IEEE, US, 7 December 1998 (1998-12-07), pages 273-278, XP010318336 ISBN: 0-7803-4919-9

EP 1 459 555 B1

**Description**

FIELD OF THE INVENTION

The invention relates to a method of embedding auxiliary information into a media signal by subjecting signal components of said media signal to quantization index modulation employing a quantization step, and to an arrangement for embedding auxiliary information into a media signal by subjecting signal components of said media signal to quantization index modulation employing a quantization step.

The invention also relates to a method of retrieving data being embedded in components of a watermarked media signal by subjecting signal components of a media host signal to quantization index modulation, the method comprising the step of employing a quantization step to retrieve the embedded data, and to an arrangement for retrieving data being embedded in components of a watermarked media signal by subjecting signal components of a media host signal to quantization index modulation, the arrangement being arranged to retrieve the embedded data by employing a quantization step. Such methods and apparatus as are described in EP-A-1253784, which is a publication of the type described in Art. 54 (3) EPC.

BACKGROUND OF THE INVENTION

Digital watermarking is the art of embedding auxiliary information in audiovisual objects. Digital watermarking has a large number of applications, among which copy(right) protection, royalty tracking, commercial verification, added value content, interactive toys and many more. The classical approach to digital watermarking is basically noise addition, whereby adding a known noise-like signal w modifies an original signal s. Watermark detection is essentially correlation, where the resulting correlation value consists of two components, viz. the wanted term <s,s> and an interference term <s,w>. This latter interference term is the main reason that noise addition is, at least theoretically, a less than optimal method for watermarking.

Recent publications have shown that, assuming certain attack models, optimal watermarking can be achieved by quantization. In essence, quantization watermarking amounts to the following. In the space S of host signals s, N sets of code points $C_n$ are chosen, where N is equal to the number of messages to be embedded (the payload of the watermark). A message m is embedded in a host signal s by modifying the host signal into a signal $\underline{s}$, such that s and $\underline{s}$ are (perceptually) close and such that $\underline{s}$ is closer to a point in $C_m$ than to any other point in any of the other code sets $C_n$, n different from m. This type of watermarking is usually referred to as Quantization Index Modulation or QIM. The distance between the points of the code sets is referred to as grid parameter or quantization step.

Decoding a watermark amounts to finding the closest points c in the union of code point sets, and deciding upon the message m if and only if the point c is member of the code set $C_m$.

A problem of the QIM watermarking scheme is that the grid parameter needs to be known at the detector side. Knowledge of the quantization step is however not guaranteed in many practical examples. In theoretical publications relating to QIM, it is generally assumed that the detector uses the same quantization step as the embedder. However, this leads to incorrect results if the watermarked signal has been subjected to degradations such as scaling.

OBJECT AND SUMMARY OF THE INVENTION

It is an object of the invention to provide a method and arrangement for embedding data in a media host signal which renders it possible to correctly retrieve the embedded data from a scaled watermarked signal. It is a further object of the invention to provide a corresponding method and arrangement for retrieving the embedded data.

To this end, the embedding method is characterized in that the method comprises the step of controlling said quantization step to be proportional ($\alpha$) to a measurable characteristic parameter of said signal components, which characteristic parameter has the property ofbeing scaled by a scaling factor when said media signal components are scaled by the same scaling factor. The corresponding detecting method is characterized in that the method comprises the step of controlling said quantization step to be proportional to measurable characteristic parameter of said watermarked signal components, said characteristic parameter, having the property of being scaled by a scaling factor when said media signal components are scaled by the same scaling factor.

An advantageous example of such characteristic parameter is the square root of the energy of the signal.

The arrangement for embedding is characterized in that the arrangement comprises means for controlling said quantization step to be proportional to a measurable characteristic parameter of said signal components, which characteristic parameter has the property of being scaled by a scaling factor when said media signal components are scaled by the same scaling factor.

The arrangement for retrieving is characterized in that the arrangement comprises means for controlling said quantization step to be proportional to a measurable characteristic parameter of said watermarked signal components, said characteristic parameter having the property of being scaled by a scaling factor when said media signal components are scaled by the same scaling factor.

Further advantageous embodiments of the embedding and detection methods and arrangements are defined in the sub claims and will be described hereafter by way of example.

BRIEF DESCRIPTION OF THE DRAWINGS

Fig. 1 shows a general schematic diagram of a system comprising a watermark embedder and a detector according to the invention.
Figs. 2 and 3 show diagrams to illustrate the operation of the system which is shown in Fig. 1.
Figs. 4-7 show diagrams to illustrate the operation of a preferred embodiment of the system according to the invention.
Fig. 8 shows a schematic diagram of a preferred embodiment of a watermark embedder according to the invention.
Fig. 9 shows a schematic diagram of a preferred embodiment of a watermark detector according to the invention.

DESCRIPTION OF EMBODIMENTS

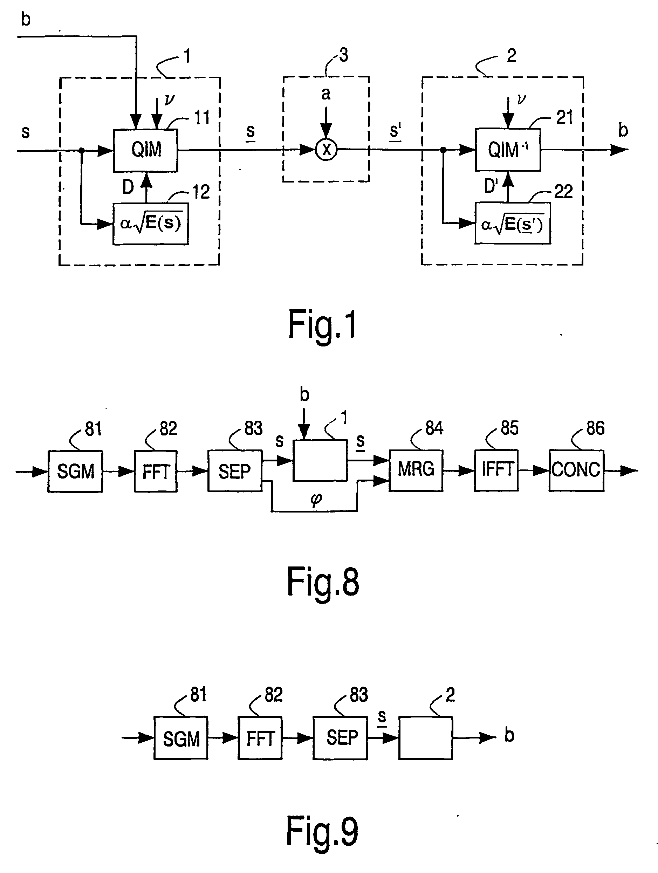

Fig. 1 shows a general schematic diagram of a system comprising a watermark embedder (or encoder) **1** and a detector (or decoder) **2** according to the invention. The watermark encoder embeds a watermark message b in a host signal s such that the distortion between the host signal s and the watermarked signal $\underline{s}$ is negligible. The decoder **2** must be able to detect the watermark message from the received signal $\underline{s}$. Fig. 1 shows **a** "blind" watermarking scheme. This means that the host signal s is not available to the decoder **2**.

In practice, the watermarked signal has undergone signal processing, passed through a communication channel, and/or has been subject of an attack. This is shown in Fig. 1 as a channel **3** between embedder **1** and detector **2.** The channel scales the amplitude of the watermarked signal s with a factor a (usually a<1). The channel may also add noise, and/or introduce an additional offset (not shown).

The watermark encoder **1** and decoder **2** involve a "codebook" that is available at both ends. In the encoder **1,** the code book maps an input sample $s_j$ onto an output sample $\underline{s}_j$, the output sample value being dependent on the message symbol $b_j$. The decoder **2** uses the same codebook to reconstruct the message symbol $b_j$ from the sample $\underline{s}_j$.

The QIM encoding/decoding principle is mostly easily understood by considering scalar quantization of signal sample values. To this end we choose a quantization step D, and construct two code sets $C_0$ and $C_1$ as follows: the set $C_0$ consists of all the even multiples of D, and the set $C_1$ consists of all the odd multiples of D. In its simplest form, watermarking a length K signal s = $(s_1,...,s_K)$ with a bit string b=$(b_1,..., b_K)$ is achieved by for each j rounding $s_j$ to the nearest even multiple of D for $b_j$=0, and rounding it to the nearest odd multiple of D for $b_j$=1. The bit string b can be recovered by rounding the components of $\underline{s}$ to the grid spanned by D, and concluding a 0 bit for every even multiple of D and a 1 bit for every odd multiple of D.

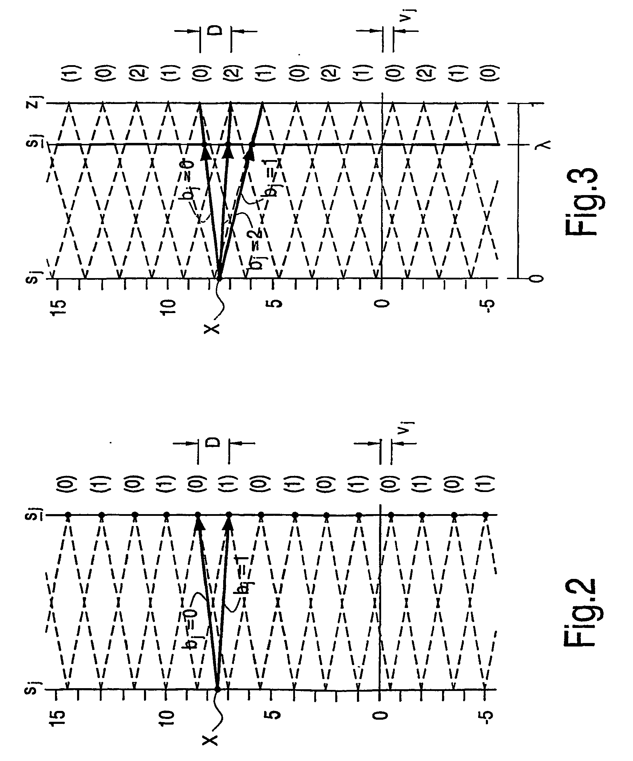

The codebook used by the watermark encoder and decoder is preferably randomized, dependent on a secure key to achieve secrecy of watermark communication. To this end, the values of $\underline{s}$ are dithered by using for each sample index j a secret dither value $v_j$. The dither values $v_j$ are preferably real numbers. This prevents the samples $\underline{s}_j$ from always lying on the grid spanned by D, so that an observer cannot even "see" that the signal has been watermarked. This watermark embedding scheme is illustrated in Fig. 2. The signal media samples $s_j$ on the left vertical axis, an example of which is denoted X, are rounded to the nearest even ($b_j$=0) or odd ($b_j$=1) multiple of D, and provided with an offset $v_j$. In Fig. 2, the quantization step size is D=1.5 and the dither value for the particular signal sample is $v_j$=-0.5. Hereafter, the dither value $v_j$ will be expressed as the product of a multiplication factor $v_j$ and the quantization step size D: $v_j = v_j \times D$, where -1< $v_j$ <1.

A mathematical expression of this embedding process referred to as "dithered uniform scalar quantization" can be derived as follows. The discrete levels that an output sample $\underline{s}_j$ can assume for a given offset $v_j$ is:

$$\underline{s}_j = (2m + b_j) \times D + v_j \times D \, , \text{ where } m=..,-2,-1,0,1,2,... \tag{1}$$

The output value $\underline{s}_j$ must be as close as possible to the input value $s_j$. This can be expressed as:

$$s_j \cong \underline{s}_j$$

$$s_j \cong (2m + b_j) \times D + v_j \times D$$

$$m \cong \frac{s_j - (2m + b_j) \times D}{2D}$$

The latter condition is fulfilled if

$$m = \text{round}\left\{ \frac{s_j - (2m + b_j) \times D}{2D} \right\} \tag{2}$$

Substitution of (2) in (1) yields:

$$\underline{s}_j = \left[ 2 \times \text{round}\left\{ \frac{\dfrac{s_j}{D} - b_j - v_j}{2} \right\} + v_j + b_j \right] \times D \tag{3}$$

This formula has the following interpretation. Firstly, for the sample value $s_j$, we compute the "quantization index" $s_j/D$. Secondly, we round this quantization index to a shifted version of integers. It is easy to see that for $b_j=0$ or $b_j=1$ the modulated indices lie on two distinct subsets. Finally we multiply by D to restore the original scale of the sample value s. One easily sees that the maximal distortion for a sample value is equal to D.

The purpose of the dither sequence is twofold. Firstly, it provides security: estimating the step size D has become a difficult task, as a simple analysis of the sample value histogram is no longer sufficient. And even if D is known, estimating $b_j$ from $b_j+v_j$ is impossible without knowledge of $v_j$. Secondly, it provides robustness: if the dither sequence is sufficiently random, the signal $\underline{s}$ can be modeled as s plus a noise term. For the topics of the next sections, this allows a better approximation of D from $\underline{s}$ than if s were given a more constant offset. Equation (3) makes immediately clear why scale degradations are a problem for QIM. A scaled version axs of s leads to a quantization index $a \times s/D$, i.e. a times the original quantization index s/D. Given the detection formula in Equation (4) below, it is obvious that it is no longer possible to reliably retrieve the embedded information.

For completeness of disclosure of this invention, Fig. 3 illustrates the operation of an even more general embodiment of the QIM watermark embedding process. In this embodiment, ternary embedding ($b_j=0$, 1, or2) is employed. Moreover, embedded symbols are not represented by discrete <u>points</u> of the <u>s</u>-axis, but by distinct <u>ranges</u> of values <u>s</u>$_j$. It can easily be derived from this Figure that the output signal $\underline{s}_j$ can now be described as:

$$\underline{s}_j = s_j + \lambda(z_j - s_j)$$

where $z_j$ denotes the discrete points as defined above by Equation (3).

Detection of embedded information is simply a matter of computing of the quantization index, compensating for the dither and checking the parity of the result. For the binary embedding scheme, this is concisely expressed as follows:

$$\underline{b}_j = \text{mod}\left( \text{round}\left\{ \frac{s_j}{D} \right\} + v_j, 2 \right), \tag{4}$$

where $\underline{b}_j$ denotes the estimated bit value.

Equation (4) indicates that the watermark decoder needs a few essential parameter values before the watermark payload can be retrieved. Firstly it needs the dither sequence $v=(v_1,...,v_K)$ in order to make the correct interpretation as a 0 or 1 bit. In any practical system, where alignment of dither string and signal is usually not guaranteed, this immediately implies a synchronization problem. Secondly, and more importantly, the grid parameter D needs to be known at the detector side. Knowledge of D is however not guaranteed in many practical examples. A typical example of gain degradations can be found in watermarking of audio, where s is chosen to represent waveform sample values. A gain degradation in this case amounts to turning up or down the volume. If the gain factor is within limits, usually this will not be experienced as perceptual degradation. In particular, detecting a watermark over the air (playing out from a playback device, receiving over the air with a recording device) will involve gain degradations.

The problem this invention addresses is the retrieval of the quantization step size D from a received signal $\underline{s}$ without explicit knowledge of the gain factor **a.** This problem has received little attention so far in literature. The key idea is to make the step size D dependent on the host signal s, in such a way that if s is scaled in amplitude by a factor a, the estimated step size D(a×s) is also scaled by a factor a to a×D(s). In other words, scaling of s commutes with scaling of D.

The quantization step D is, for example, a chosen fraction of the Lp-norm of the signal s (or a chosen fraction of individual signal samples $s_j$), where p = 1 or p = 2,

$$\|s\|_p = \left\{ \sum_j \left| s_j \right|^p \right\}^{1/p}$$

In a preferred embodiment, the quantization step size is proportional to the square root of the energy of the signal (i.e. p = 2).

Returning to Fig. 1, it is shown that the watermark embedder **1** comprises a quantization index modulation (QIM) circuit **11** operating in accordance with Equation (3). The embedder receives the quantization step size D to be used for the QIM process from a quantization step controlling circuit **12** operating in accordance with:

$$D = \alpha\sqrt{E(s)}$$

where E(s) is the energy of the host signal s and $\alpha$ is a predetermined factor.

Similarly, the watermark detector **2** comprises a demodulation (QIM$^{-1}$) circuit **31** operating in accordance with Equation (4). The detector receives the quantization step size D' to be used from a quantization step controlling circuit **12** operating in accordance with:

$$D' = \alpha\sqrt{E(s')}$$

where E($\underline{s}$') is the energy of the received signal $\underline{s}$ and $\alpha$ is the same factor as used by the embedder **1.**

The quantization index modulation may be applied to all signal samples in the original signal domain (audio waveform samples, video pixels) or selected ones of said signal samples. The quantization index modulation may also be applied to components of the signal in some transform domain, for example, DCT coefficients of video images or spectral frequency components of an audio signal.

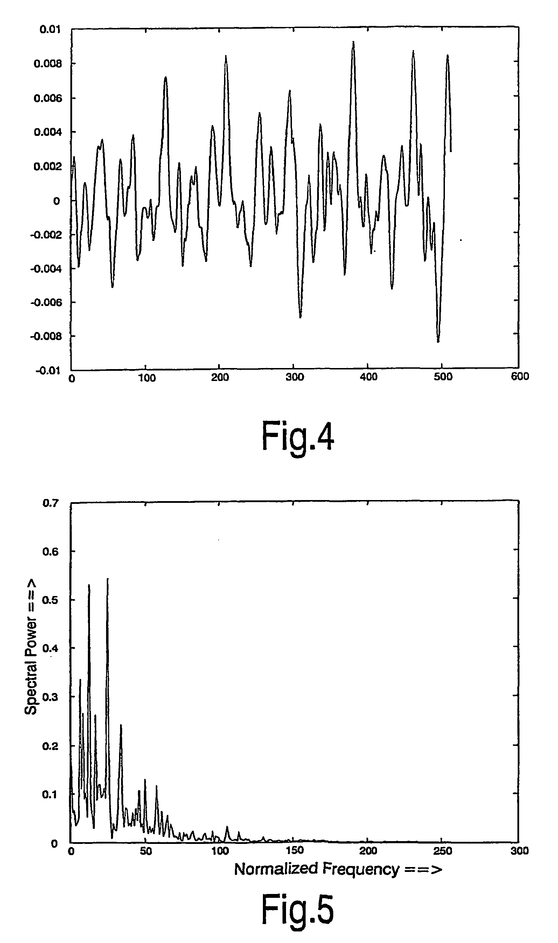

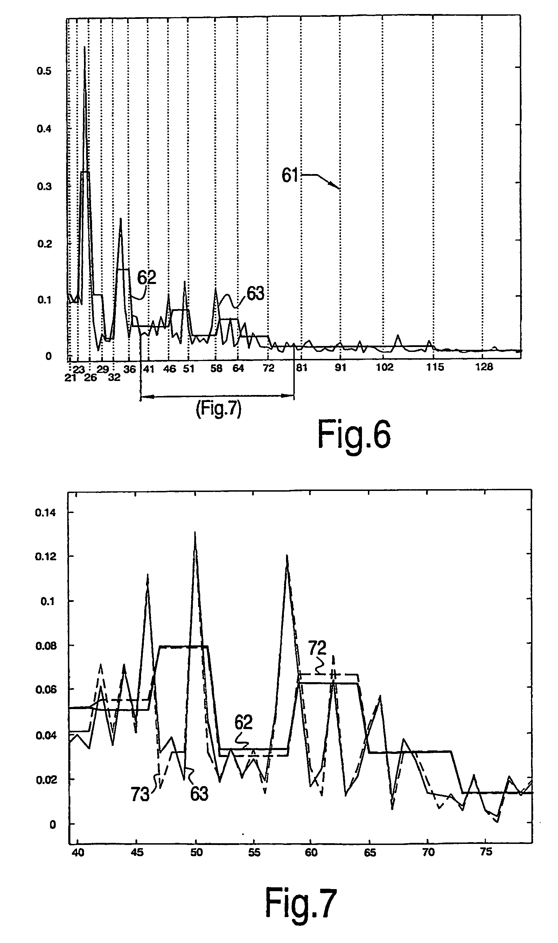

A preferred embodiment will now be described in more details. In this example, the signal s is an audio clip. Fig. 4 shows a waveform of such an audio signal in the time domain. As is well recognized, audio is best represented in the frequency domain, and we therefore apply to a frequency representation using a Fast Fourier Transform (FFT). Fig. 5 shows the frequency spectrum of the audio signal.

In this preferred embodiment, the watermark embedding is done by modulating the amplitude of the power spectral components. The spectral components are modified by quantization. Determining the quantization step size on the basis of the total spectral energy has a few disadvantages. Firstly, it implies that every spectral component is quantized with the same step size D. This is perceptually not an optimal strategy, because the allowed distortion per spectral component is linear with the magnitude of the component. Basing the step size on the total energy implies that large components (typically the lower frequencies) will be too finely quantized, and the small components (typically the higher frequencies) will be too coarsely quantized. Secondly, gain degradation is very often not uniform over the frequency range, leading to a mismatch per component between the estimated gain factor and the real gain factor. To overcome these problems, the spectrum is subdivided into several bands and the factor $\alpha$ is determined per band on the basis of the energy per band. In accordance with psycho-acoustical models, these bands are chosen to grow logarithmically with frequency. For each band, a fixed fraction of the square root of the mean power (RMSE) is chosen as the threshold (i.e. quantization step) for that band.

Fig. 6 shows an example of a logarithmic division in bands (dotted vertical grid **61**). Reference numeral **63** denotes the host power spectral density. Reference numeral **62** denotes the resulting RMSE from which the quantization step size D (see Fig. 1) in the respective sub-bands is being derived. Note that the RMSE is a reasonable approximation of the host power spectral density for higher frequencies, but that for lower frequencies errors are larger.

Fig. 7 shows an enlarged portion of Fig. 6. The dashed line **73** in this Figure denotes the power spectral density of the embedded signal after embedding with a fractional factor $\alpha = 0.1$. It can be seen that the difference between original signal **63** and watermarked signal **73** is minimal. The dashed line **72** denotes the resulting RMSE from which the quantization step size D' (see Fig. 1) in the sub-bands is derived. It is evident that the original step sizes **62** and re-estimated step sizes **72** only differ marginally. Note that for an appropriate comparison, no gain degradation (a=1 in Fig. 1) is assumed in this example.

Fig. 8 shows a block diagram of the preferred embodiment of the embedding arrangement, which operates as described above. The arrangement includes a circuit **81** for segmenting the audio signal in time frames, a fast Fourier transform circuit **82,** and a circuit **83** for separating each Fourier coefficient into its phase and magnitude. The magnitudes constitute the host signal s for the embedding circuit **1** (cf. Fig. 1). The modified magnitudes s̲ and the corresponding phases $\phi$ are subsequently merged **(84)** and inverse Fourier transformed **(85).** The time frames are finally concatenated **(86)** to form the watermarked audio signal.

Fig. 9 shows a block diagram of the corresponding detection arrangement. The arrangement comprises the same segmentation circuit **81,** Fourier transform circuit **82,** and separating circuit **83** as shown in Fig. 8. The magnitudes of the Fourier coefficients constitute the watermarked signal component s̲ for the detector **2** (cf. Fig. 1).

It is to be noted that the proposed band based computation allows many variations. One that needs to be mentioned is the sliding & expanding average, which is a 'continuous' version of the band based average: for every frequency component $f_n$, the quantization step size is computed on the basis of the energy in the frequency interval [n/factor,...,factor$\times$n]. This formula says that the averaging interval grows linearly with the frequency index n, which is in accordance with the idea of logarithmic frequency bands.

It is also to be noted that similar techniques can be used for image and video watermarking. In case of image watermarking, a natural option would be to quantize spatial sample values, where the quantization step sizes are based on some local statistical moments.

The invention can be summarized as follows. The problem of scale degradations is addressed that may occur in watermarking schemes based on quantization index modulation (QIM). In accordance with the invention, the quantization step size (D) being employed by the embedder (11) and detector (21) is derived (12, 22) from a measurable characteristic parameter which has the property that, when the applied signal is scaled by a factor (a), it is scaled by substantially the same factor. In a preferred embodiment, said parameter is the square root of the energy of the signal $(\sqrt{(E(s))})$**,** and the quantization step is a predetermined fraction ($\alpha$) thereof.

## Claims

1. A method of embedding auxiliary information (b) into a media signal (S) by subjecting signal components of said media signal to quantization index modulation (11) employing a quantization step (D), **characterized in that** the method comprises the step of, controlling (12) said quantization step (D) to be proportional ($\alpha$) to a measurable characteristic parameter of said signal components, which characteristic parameter has the property of being scaled by a scaling factor (a) when said media signal components are scaled by the same scaling factor (a).

2. A method as claimed in claim 1, wherein said characteristic parameter is the Lp-norm of the signal components.

3. A method as claimed in claim 1, wherein said characteristic parameter is the square root of the energy of said signal components.

4. A method as claimed in claim 1, wherein said signal components are individual samples of the media signal.

5. A method as claimed in claim 1, wherein said signal components are spectral frequency components of said media signal.

6. A method as claimed in claim 5, wherein said characteristic parameter is the square root of the energy of said spectral frequency components in respective frequency sub-bands.

7. A method as claimed in claim 6, wherein said sub-bands are logarithmically spaced sub-bands.

8. An arrangement (1) for embedding auxiliary information (b) into a media signal (S) by subjecting signal components of said media signal to quantization index modulation (11) employing a quantization step (D), **characterized in that** the arrangement comprises means (12) for controlling said quantization step (D) to be proportional to a measurable characteristic parameter of said signal components, which characteristic parameter has the property of being scaled by a scaling factor (a) when said media signal components are scaled by the same scaling factor (a).

9. A method of retrieving data (b) being embedded in components of a watennarked media signal ($\underline{S}^1$) by subjecting signal components of a media host signal (S) to quantization index modulation (11), the method comprising the step of employing a quantization step ($D^1$) to retrieve the embedded data, **characterized in that** the method comprises the step of controlling (22) said quantization step ($D^1$) to be proportional to measurable characteristic parameter of said watermarked signal components, said characteristic parameter having the properly of being scaled by a scaling factor (a) when said media signal components are scaled by the same scaling factor (a).

10. A method as claimed in claim 9, wherein said characteristic parameter is the Lp-norm of the signal components.

11. A method as claimed in claim 9, wherein said characteristic parameter is the square root of the energy of said signal components.

12. A method as claimed in claim 9, wherein said signal components are individual samples of the media signal.

13. A method as claimed in claim 9, wherein said signal components are spectral frequency components of said media signal.

14. A method as claimed in claim 13, wherein said characteristic parameter is the square root of the energy of said spectral frequency components in respective frequency sub-bands.

15. A method as claimed in claim 14, wherein said sub-bands are logarithmically spaced sub-bands.

16. An arrangement (2) for retrieving data (b) being embedded in components of a watermarked media signal ($\underline{S}^1$) by subjecting signal components of a media host signal (S) to quantization index modulation (11), the arrangement being arranged to retrieve the embedded data by employing a quantization step ($D^1$), **characterized in that** the arrangement comprises means (22) for controlling said quantization step ($D^1$) to be proportional to a measurable characteristic parameter of said watermadced signal components, said characteristic parameter having the property of being scaled by a scaling factor (a) when said media signal components are scaled by the same scaling factor (a).

**Patentansprüche**

1. Verfahren zur Einbettung von Hilfsinformation (b) in ein Multmediasignal (S) indem die Signalkomponenten des besagten Multmediasignals einer Quantisierungsindexmodulation (11) unterworfen werden, wobei ein Quantisierungsschritt (D) eingesetzt wurde, **dadurch gekennzeichnet, dass** das Verfahren den Schritt zur Steuerung (12) des besagten Quantisierungsschritts (D) umfasst, so dass er proportional ($\alpha$) zu einem messbaren charakteristischen Parameter der besagten Signalkomponenten ist, welcher charakteristische Parameter die Eigenschaft hat, von einem Maßstabsfaktor (a) verändert zu werden, wenn die besagten Multimediasignale vom selben Maßstabsfaktor (a) verändert werden.

2. Verfahren nach Anspruch 1, wobei der besagte charakteristische Parameter die Lp - Norm der Signalkomponenten ist.

3. Verfahren nach Anspruch 1, wobei der besagte charakteristische Parameter die Quadratwurzel der Energie der besagten Signalkomponenten ist.

4. Verfahren nach Anspruch 1, wobei die besagten Signalkomponenten individuelle Proben des Multimediasignals sind.

**5.** Verfahren nach Anspruch 1, wobei die besagten Signalkomponenten spektrale Frequenzkomponenten des besagten Multimediasignals sind.

**6.** Verfahren nach Anspruch 5, wobei der besagte charakteristische Parameter die Quadratwurzel der Energie der besagten spektralen Frequenzkomponenten in entsprechenden Frequenzunterbändern ist.

**7.** Verfahren nach Anspruch 6, wobei die besagten Unterbänder logarithmisch beabstandete Unterbänder sind.

**8.** Vorrichtung (1) zur Einbettung von Hilfsinformation (b) in ein Multimediasignal (S) indem Signalkomponenten des besagten Multimediasignals einer Quantisierungsindexmodulation (11) unterworfen werden, wobei ein Quantisierungsschritt (D) eingesetzt wurde, **dadurch gekennzeichnet, dass** das Verfahren Mittel (12) zur Steuerung des besagten Quantisierungsschritts (D) umfasst, so dass er proportional ($\alpha$) zu einem messbaren charakteristischen Parameter der besagten Signalkomponenten ist, welcher charakteristische Parameter die Eigenschaft hat, von einem Maßstabsfaktor (a) rameter die Eigenschaft hat, von einem Maßstabsfaktor (a) verändert zu werden, wenn die besagten Multimediasignale vom selben Maßstabsfaktor (a) verändert werden.

**9.** Verfahren zum Auffrischen von Daten (b) die in Komponenten eines mit einem Wasserzeichen versehenen Multimediasignals (S1) indem die Signalkomponenten eines Multimediahostsignals (S) einer Quantisierungsindexmodulation (11) unterworfen werden, wobei das Verfahren den Schritt zur Verwendung eines Quantisierungschritts (D1) zur Auffrischung der eingebetteten Daten umfasst, **dadurch gekennzeichnet, dass** das Verfahren den Schritt zur Steuerung (22) des besagten Quantisierungsschritts (D1) umfasst, so dass er proportional zu einem messbaren charakteristischen Parameter der besagten mit einem Wasserzeichen versehenen Signalkomponenten ist, welcher charakteristische Parameter die Eigenschaft hat, von einem Maßstabsfaktor (a) verändert zu werden, wenn die besagten Multimediasignale vom selben Maßstabsfaktor (a) verändert werden.

**10.** Verfahren nach Anspruch 9, wobei der besagte charakteristische Parameter die Lp - Norm der Signalkomponenten ist.

**11.** Verfahren nach Anspruch 9, wobei der besagte charakteristische Parameter die Quadratwurzel der Energie der besagten Signalkomponenten ist.

**12.** Verfahren nach Anspruch 9, wobei die besagten Signalkomponenten individuelle Proben des Multimediasignals sind.

**13.** Verfahren nach Anspruch 9, wobei die besagten Signalkomponenten spektrale Frequenzkomponenten des besagten Multimediasignals sind.

**14.** Verfahren nach Anspruch 13, wobei der besagte charakteristische Parameter die Quadratwurzel der Energie der besagten spektralen Frequenzkomponenten in entsprechenden Frequenzunterbändern ist.

**15.** Verfahren nach Anspruch 14, wobei die besagten Unterbänder logarithmisch beabstandete Unterbänder sind.

**16.** Vorrichtung (2) zum Auffrischen von Daten (b) die in Komponenten eines mit einem Wasserzeichen versehenen Multimediasignals (S1) indem die Signalkomponenten eines Multimediahostsignals (S) einer Quantisierungsindexmodulation (11) unterworfen werden, wobei das Verfahren den Schritt zur Verwendung eines Quantisierungschritts (D1) zur Auffrischung der eingebetteten Daten umfasst, **dadurch gekennzeichnet, dass** die Vorrichtung Mittel (22) zur Steuerung des besagten Quantisierungsschritts (D1) umfasst, so dass er proportional zu einem messbaren charakteristischen Parameter der besagten mit einem Wasserzeichen versehenen Signalkomponenten ist, welcher charakteristische Parameter die Eigenschaft hat, von einem Maßstabsfaktor (a) verändert zu werden, wenn die besagten Multimediasignale vom selben Maßstabsfaktor (a) verändert werden.

**Revendications**

**1.** Procédé permettant d'intégrer des informations auxiliaires (b) dans un signal multimédia (S) en soumettant des composantes de signal dudit signal multimédia à une modulation de l'indice de quantification (11) en utilisant un pas de quantification (D), **caractérisé en ce que** le procédé comprend l'étape visant à contrôler (12) que ledit pas de quantification (D) est proportionnel ($\alpha$) à un paramètre caractéristique mesurable desdites composantes du signal, lequel paramètre caractéristique a la propriété d'être mis à l'échelle par un facteur d'échelle (a) lorsque lesdites composantes du signal multimédia sont mises à l'échelle par le même facteur d'échelle (a).

2. Procédé suivant la revendication 1, dans lequel ledit paramètre caractéristique est la norme Lp des composantes du signal.

3. Procédé suivant la revendication 1, dans lequel ledit paramètre caractéristique est la racine carrée de l'énergie desdites composantes du signal.

4. Procédé suivant la revendication 1, dans lequel lesdites composantes du signal sont des échantillons individuels du signal multimédia.

5. Procédé suivant la revendication 1, dans lequel lesdites composantes du signal sont des composantes fréquencielles spectrales dudit signal multimédia.

6. Procédé suivant la revendication 5, dans lequel ledit paramètre caractéristique est la racine carrée de l'énergie desdites composantes fréquencielles spectrales dans des sous-bandes de fréquences respectives.

7. Procédé suivant la revendication 6, dans lequel lesdites sous-bandes sont des sous-bandes espacées de manière logarithmique.

8. Montage (1) pour intégrer des informations auxiliaires (b) dans un signal multimédia (S) en soumettant des composantes de signal dudit signal multimédia à une modulation de l'indice de quantification (11) en utilisant un pas de quantification (D), **caractérisé en ce que** le montage comprend des moyens (12) pour contrôler que ledit pas de quantification (D) est proportionnel à un paramètre caractéristique mesurable desdites composantes du signal, lequel paramètre caractéristique a la propriété d'être mis à l'échelle par un facteur d'échelle (a) lorsque lesdites composantes du signal multimédia sont mises à l'échelle par le même facteur d'échelle (a).

9. Procédé permettant de récupérer des données (b) intégrées dans des composantes d'un signal multimédia filigrané ($\underline{S}^1$) en soumettant des composantes de signal d'un signal hôte multimédia (S) à une modulation de l'indice de quantification (11), le procédé comprenant l'étape de l'utilisation d'un pas de quantification ($D^1$) pour récupérer les données intégrées, **caractérisé en ce que** le procédé comprend l'étape visant à contrôler (12) que ledit pas de quantification ($D^1$) est proportionnel à un paramètre caractéristique mesurable desdites composantes du signal filigrané, ledit paramètre caractéristique ayant la propriété d'être mis à l'échelle par un facteur d'échelle (a) lorsque lesdites composantes du signal multimédia sont mises à l'échelle par le même facteur d'échelle (a).

10. Procédé suivant la revendication 9, dans lequel ledit paramètre caractéristique est la norme Lp des composantes du signal.

11. Procédé suivant la revendication 9, dans lequel ledit paramètre caractéristique est la racine carrée de l'énergie desdites composantes du signal.

12. Procédé suivant la revendication 9, dans lequel lesdites composantes du signal sont des échantillons individuels du signal multimédia.

13. Procédé suivant la revendication 9, dans lequel lesdites composantes du signal sont des composantes fréquencielles spectrales dudit signal multimédia.

14. Procédé suivant la revendication 13, dans lequel ledit paramètre caractéristique est la racine carrée de l'énergie desdites composantes fréquencielles spectrales dans des sous-bandes de fréquences respectives.

15. Procédé suivant la revendication 14, dans lequel lesdites sous-bandes sont des sous-bandes espacées de manière logarithmique.

16. Montage (2) pour récupérer des données (b) intégrées dans des composantes d'un signal multimédia filigrané ($\underline{S}^1$) en soumettant des composantes de signal d'un signal hôte multimédia (S) à une modulation de l'indice de quantification (11), le montage étant à même de récupérer les données intégrées en utilisant un pas de quantification ($D^1$), **caractérisé en ce que** le montage comprend des moyens (22) pour contrôler que ledit pas de quantification ($D^1$) est proportionnel à un paramètre caractéristique mesurable desdites composantes du signal filigrané, ledit paramètre caractéristique ayant la propriété d'être mis à l'échelle par un facteur d'échelle (a) lorsque lesdites composantes du signal multimédia sont mises à l'échelle par le même facteur d'échelle (a).

# Fig.1

# Fig.8

# Fig.9

Fig.2

Fig.3

EP 1 459 555 B1

Fig.4

Fig.5

Fig.6

Fig.7